# DEMANDE DE BREVET EUROPEEN

(11) **EP 4 660 057 A1**
(43) Date de publication de la demande: **10.12.2025**
(21) Numéro de dépôt: 25170790.7
(22) Date de dépôt: 15.04.2025
(51) Int. Cl.: B62D 25/02, B62D 25/08, B62D 25/20

(54) **ENSEMBLE DE SOUBASSEMENT COMPORTANT UN BRANCARD DISCONTINU OPTIMISÉ POUR UN CHOC FRONTAL À FAIBLE RECOUVREMENT ET VÉHICULE AUTOMOBILE COMPORTANT UN TEL ENSEMBLE**

(30) Priorité: 03.06.2024 FR 2405753
(71) Demandeur: Stellantis Auto SAS, 78300 Poissy (FR)
(72) Inventeur: THOR, TOU, 25150 PONT DE ROIDE VERMONDANS (FR); MAGAS, MIHAELA MARIA, 70110 AUTREY LES CERRE (FR); TROPEE, NICOLAS, 90000 BELFORT (FR); BORNIER, PAUL, 70400 LUZE (FR); BESSETTE, DAMIEN, 25150 ECOT (FR); MAURICE, SEBASTIEN, 25360 GONSANS (FR)
(74) Mandataire: BCIP

(57) **Abrégé**

Ensemble de soubassement comportant un brancard discontinu optimisé pour un choc frontal à faible recouvrement et véhicule automobile comportant un tel ensemble.

L'invention concerne un ensemble de soubassement (1) d'un véhicule, comprenant :
- un plancher avant (5),
- un longeron latéral longitudinal (3), bordant latéralement une partie dudit plancher avant,
- un brancard (7), comportant une partie avant (9) et une partie arrière (11) s'étendant longitudinalement en vis-à-vis dudit longeron latéral longitudinal (3).

Selon l'invention, l'ensemble de soubassement (1) comporte une pièce d'interface intermédiaire (13) sur laquelle est fixée, d'une part, ladite partie avant (9) dudit brancard (7) et, d'autre part, ledit longeron latéral longitudinal (3) et ladite partie arrière (11) dudit brancard (7), la distance transversale (D) entre ledit longeron latéral longitudinal (3) et ladite partie arrière (11) étant inférieure ou égale à 25% de la largeur (L) dudit véhicule.

## Description

### [Domaine technique]

L'invention a trait au domaine des véhicules automobiles, en particulier au domaine de la sécurité passive du véhicule automobile pour assurer une protection en cas de collision frontale.

L'invention concerne plus particulièrement un ensemble de soubassement d'un véhicule automobile et un véhicule automobile comportant un tel ensemble de soubassement.

### [Etat de la technique antérieure]

Une structure de caisse de véhicule automobile comporte un ensemble d'éléments structurels de tôle conférant la raideur au véhicule automobile, assemblés les uns aux autres et formant l'ossature du véhicule automobile.

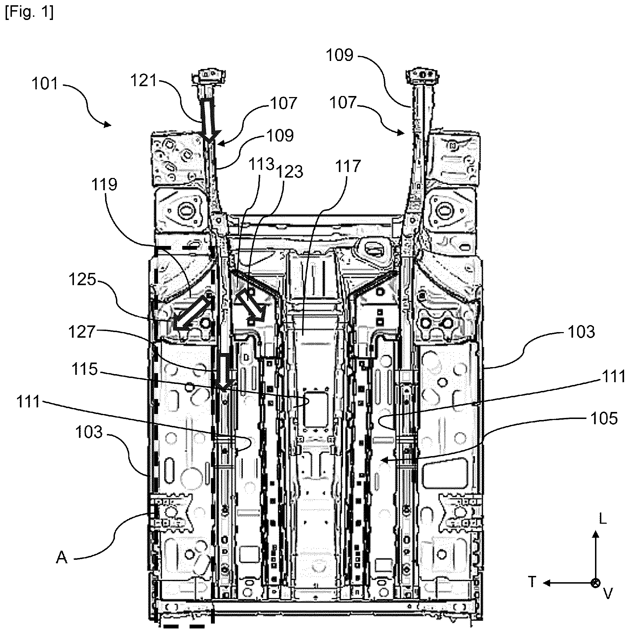

On se réfère à la figure 1 montrant un ensemble de soubassement 101 de l'art antérieur.

La structure de caisse comporte, notamment, parmi ces éléments de tôle, une structure latérale gauche et une structure latérale droite.

Chaque structure latérale comporte un ensemble d'éléments horizontaux supérieurs et inférieurs, s'étendant sensiblement longitudinalement relativement à la caisse, et un ensemble d'éléments verticaux, s'étendant sensiblement verticalement relativement à la caisse.

Les éléments horizontaux inférieurs comportent des longerons latéraux longitudinaux 103 définissant une partie du pourtour de l'ensemble de soubassement 101 de la caisse.

La structure de caisse comporte aussi, parmi ces éléments structurels, un plancher avant 105.

La structure de caisse comporte en outre, parmi ces éléments structurels, des poutres structurelles longitudinales 107 couramment appelées « brancards » et s'étendant longitudinalement relativement au véhicule.

Chaque brancard 107 comporte typiquement une partie avant 109, s'étendant de part et d'autre d'un groupe motopropulseur (non représenté) du véhicule, prolongée à l'arrière par une partie arrière 111, s'étendant en arrière de la partie avant 109 et située en vis-à-vis de chaque longeron latéral longitudinal 103, vers l'intérieur du plancher avant 105 du véhicule et sous le plancher avant 105 du véhicule.

L'ensemble formé par la partie avant 109 et la partie arrière 111 est monobloc et définit le brancard 107.

L'ensemble de soubassement 1 comporte aussi, de part et d'autre du brancard 107, une première pièce d'interface 113, fixée d'une part au brancard 107 et d'autre part à un renfort 115 de tunnel central 117, et une deuxième pièce d'interface 119, fixée d'une part au brancard 107 et d'autre part au longeron latéral longitudinal 103.

Lorsque le véhicule est soumis à un choc frontal, les efforts longitudinaux circulent dans le brancard 107, d'abord au niveau de sa partie avant 109, comme représenté par la flèche 121 à la figure 1.

Les efforts sont ensuite transmis :
- en partie au renfort 115 de tunnel central 117 via la première pièce d'interface 113, comme représenté par la flèche 123,
- en partie au longeron latéral longitudinal 103 via la deuxième pièce d'interface 119, comme représenté par la flèche 125,
- en partie à la partie arrière 111 du brancard 107, comme représenté par la flèche 127.

Ce type de conception permet de reprendre convenablement les efforts lors de collisions frontales avec un recouvrement compris entre 40% et 100% de la largeur du véhicule.

Toutefois, lors d'un choc frontal à faible recouvrement (« small overlap frontal crash test » en anglais), lors duquel le véhicule circule à une vitesse de 64km/h environ vers un obstacle rigide avec une plage de recouvrement entre l'obstacle et la façade avant du véhicule inférieure à 25%, le décalage de la zone d'impact entraîne une réduction des efforts repris par le brancard 107 et une augmentation des efforts dans la zone A comprise entre la partie arrière 111 du brancard 107 et le longeron latéral longitudinal 103.

Cela augmente considérablement le risque d'écrasement dans la zone A comprise entre la partie arrière 111 du brancard 107 et le longeron latéral longitudinal 103 correspondant.

Cet écrasement longitudinal entraîne des dommages importants sur la structure du véhicule et peut entraîner, lors du déroulement du choc, un risque élevé d'intrusion dans l'habitacle du véhicule et donc de blessure des occupants.

### [Exposé de l'invention]

La présente invention vise à surmonter les inconvénients précités, et concerne pour ce faire un ensemble de soubassement d'un véhicule automobile, comprenant :
- un plancher avant,
- un longeron latéral longitudinal, bordant latéralement au moins une partie dudit plancher avant,
- un brancard, comportant une partie avant et une partie arrière s'étendant en arrière de ladite partie avant et s'étendant longitudinalement en vis-à-vis dudit longeron latéral longitudinal,
remarquable en ce que ledit ensemble de soubassement comporte une pièce d'interface intermédiaire sur laquelle est fixée, d'une part, ladite partie avant dudit brancard et, d'autre part, ledit longeron latéral longitudinal et ladite partie arrière dudit brancard, la distance transversale entre ledit longeron latéral longitudinal et ladite partie arrière dudit brancard étant inférieure ou égale à 25% de la largeur dudit véhicule automobile.

Ainsi, en prévoyant un ensemble de soubassement comprenant une pièce d'interface intermédiaire sur laquelle est fixée, d'une part, la partie avant du brancard et, d'autre part, le longeron latéral longitudinal et la partie arrière dudit brancard, on crée une discontinuité entre la partie avant et la partie arrière du brancard, ce qui permet de répartir de façon plus homogène des efforts dans la partie arrière du brancard et dans le longeron latéral longitudinal via la pièce d'interface intermédiaire.

Aussi, le fait que la distance transversale entre le longeron latéral longitudinal et la partie arrière du brancard soit inférieure ou égale à 25% de la largeur du véhicule automobile permet de raidir la zone comprise entre la partie arrière du brancard et le longeron latéral longitudinal, ce qui permet de limiter considérablement le risque d'écrasement dans cette zone.

On réduit ainsi le risque d'endommagement de la structure du véhicule et donc d'intrusion dans l'habitacle du véhicule. De la sorte, la protection des occupants à bord du véhicule est renforcée.

Selon des caractéristiques optionnelles de l'ensemble de soubassement selon l'invention :
- ladite partie avant dudit brancard comporte une extrémité arrière fixée à ladite pièce d'interface intermédiaire ;
- ladite partie arrière dudit brancard comporte une extrémité avant fixée à ladite pièce d'interface intermédiaire ;
- la fixation de ladite partie avant et/ou de ladite partie arrière dudit brancard sur ladite pièce d'interface intermédiaire est opérée par soudure ;
- ladite pièce d'interface intermédiaire comporte une pièce d'interface extérieure, sur laquelle est fixée ladite partie avant dudit brancard et ledit longeron latéral longitudinal, et une pièce d'interface intérieure, fixée à ladite pièce d'interface extérieure, sur laquelle est fixée ladite partie arrière dudit brancard ;
- l'ensemble de soubassement comporte une batterie de traction fixée sous ledit plancher avant et adaptée pour alimenter un moteur électrique dudit véhicule automobile, ladite batterie de traction comportant au moins un bord latéral fixé sur ladite partie arrière dudit brancard ;
- l'ensemble de soubassement comporte au moins une pièce de renfort longitudinale fixée à ladite pièce d'interface intermédiaire et à un tunnel central dudit véhicule, ladite batterie de traction comportant un bord avant fixé à ladite au moins une pièce de renfort longitudinale.

L'invention concerne aussi un véhicule automobile comportant un ensemble de soubassement, remarquable en ce que ledit ensemble de soubassement est selon l'invention.

### [Description des dessins]

D'autres caractéristiques, buts et avantages de l'invention apparaîtront à la lecture de la description détaillée qui suit pour la compréhension de laquelle on se reportera aux dessins annexés dans lesquels :
[Fig. 1] montre un ensemble de soubassement d'un véhicule automobile de l'art antérieur, vu de dessous.
[Fig. 2] est une vue de dessous d'un ensemble de soubassement d'un véhicule automobile selon l'invention.
[Fig. 3] est un agrandissement de la zone III de la figure 2.
[Fig. 4] est une vue de dessous de l'ensemble de soubassement selon une variante de réalisation.
[Fig. 5] montre de façon schématique le cheminement des efforts lorsque le véhicule est soumis à un choc frontal à faible recouvrement.

### [Description des modes de réalisation]

Dans la suite de la description, des éléments présentant une structure identique ou des fonctions analogues sont désignés par une même référence.

On adoptera par convention, à titre non limitatif, des orientations longitudinale, verticale et transversale indiquées par le trièdre direct (L, V, T) désignant les axes longitudinal, vertical et transversal du véhicule.

Dans ce qui suit, les termes « gauche », « droit », « inférieur » et « supérieur » s'entendent par rapport au véhicule.

De même, les termes « avant » et « arrière » s'entendent par rapport à l'orientation générale du véhicule tel que pris selon son sens normal de marche.

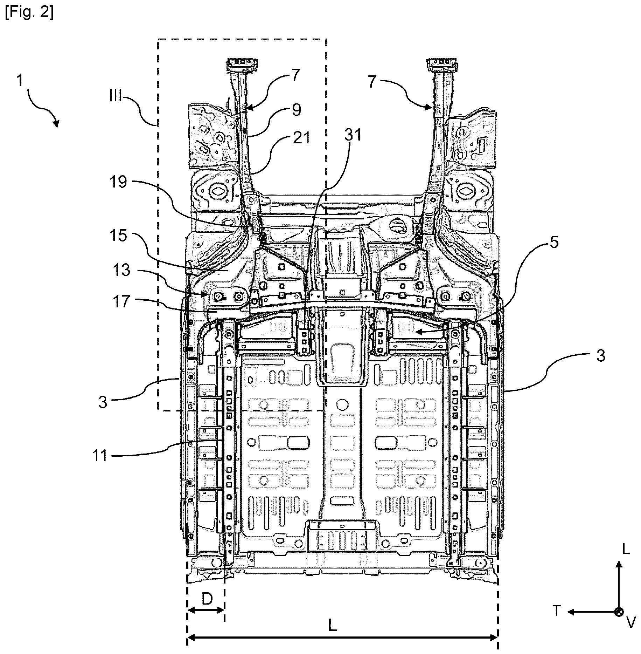

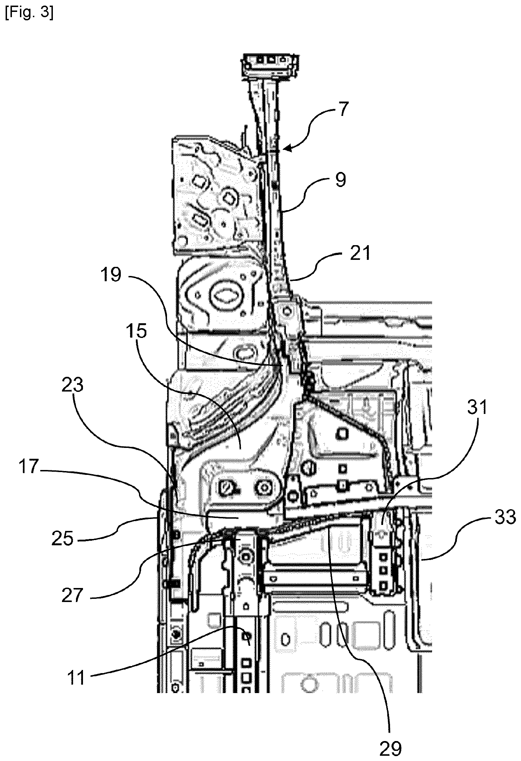

On se réfère à la figure 2 montrant un ensemble 1 de soubassement d'un véhicule automobile selon l'invention, vu de dessous, et à la figure 3 montrant un agrandissement de la zone III de la figure 2.

L'ensemble de soubassement 1 comporte des longerons latéraux longitudinaux 3 définissant une partie du pourtour de l'ensemble de soubassement 1 de la caisse.

L'ensemble de soubassement 1 comporte un plancher avant 5 définissant une pièce de la plateforme de l'habitacle du véhicule automobile.

L'ensemble de soubassement 1 comporte en outre des brancards 7 s'étendant longitudinalement relativement au véhicule.

Chaque brancard 7 comporte typiquement une partie avant 9 s'étendant de part et d'autre d'un groupe motopropulseur (non représenté) du véhicule, et une partie arrière 11 s'étendant en arrière de la partie avant 9 et s'étendant longitudinalement relativement au véhicule, en vis-à-vis du longeron latéral longitudinal 3, vers l'intérieur du plancher avant 5 et sous le plancher avant 5 du véhicule.

Selon l'invention, l'ensemble de soubassement 1 comporte une pièce d'interface intermédiaire 13 sur laquelle est fixée, d'une part, la partie avant 9 du brancard 7 et, d'autre part, le longeron latéral longitudinal 3 et la partie arrière 11 du brancard 7.

Ainsi, le brancard 7, formé par la partie avant 9 et la partie arrière 11, définit un ensemble discontinu, la partie avant 9 et la partie arrière 11 étant physiquement séparée par la pièce d'interface intermédiaire 13.

Aussi, selon l'invention, la distance transversale D entre le longeron latéral longitudinal 3 et la partie arrière 11 du brancard 7 est inférieure ou égale à 25% de la largeur L dudit véhicule automobile.

Dans l'exemple de réalisation illustré aux figures, la pièce d'interface intermédiaire 13 comporte une pièce d'interface extérieure 15 et une pièce d'interface intérieure 17 fixée à la pièce d'interface extérieure 15.

Au niveau d'une extrémité avant 19 de la pièce d'interface extérieure 15 est fixée une extrémité arrière 21 de la partie avant 9 du brancard 7.

Au niveau d'un bord latéral extérieur 23 de la pièce d'interface extérieure 15 est fixée une extrémité avant 25 du longeron latéral longitudinal 3.

Ainsi, l'agencement de la pièce d'interface extérieure 15, de la partie avant 9 du brancard 7 et du longeron latéral longitudinal 3 est tel qu'une liaison entre la partie avant 9 du brancard 7 et le longeron latéral longitudinal 3 correspondant est assurée par la pièce d'interface extérieure 15.

Sur la pièce d'interface intérieure 17, fixée à la pièce d'interface extérieure 13, est fixée une extrémité avant 27 de la partie arrière 11 du brancard 7.

Dans l'exemple de réalisation illustré aux figures, au niveau d'un bord avant 29 de la pièce d'interface intérieure 17 est en outre fixée une pièce de renfort longitudinale 31. La pièce de renfort longitudinale 31 est par ailleurs fixée à un tunnel central 33 du véhicule.

La fixation de la partie avant 9 et/ou de la partie arrière 11 du brancard 7 sur la pièce d'interface intermédiaire 13 peut par exemple être opérée par soudure.

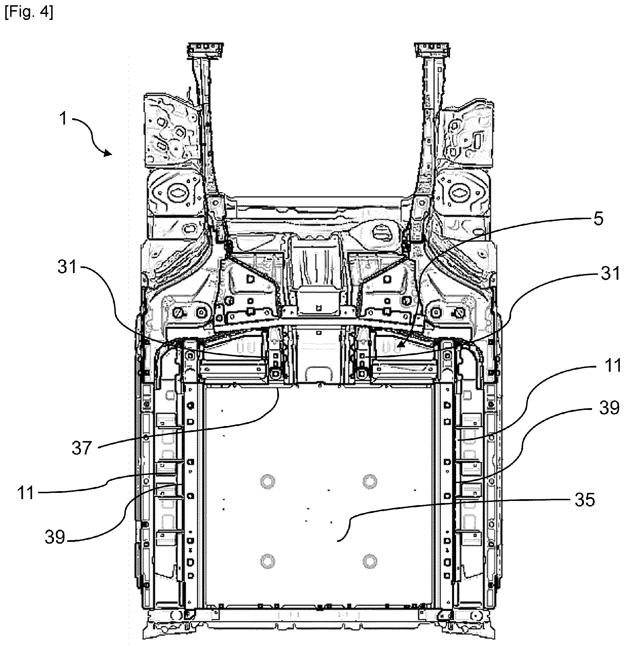

On se réfère à la figure 4 montrant l'ensemble de soubassement 1 selon une variante de réalisation, vu de dessous.

Le véhicule peut être électrique avec batterie (véhicule automobile dit « BEV », acronyme anglo-saxon de « Battery Electric Vehicle »), ou de type hybride comprenant un moteur thermique et un moteur électrique qui fonctionnent simultanément ou alternativement de manière à réduire la puissance consommée par le véhicule automobile, par exemple un véhicule de type hybride rechargeable (véhicule automobile dit « PHEV », acronyme anglais de « Plug-in Hybrid Electric Vehicle »).

Le véhicule comporte une batterie de traction 35 fixée sous le plancher avant 5 de l'ensemble de soubassement 1, alimentant le moteur électrique du véhicule.

Dans l'exemple de réalisation illustré, la batterie de traction 35 comporte un bord avant 37 fixé aux pièces de renfort longitudinales 31.

Avantageusement, la batterie de traction 35 comporte des bords latéraux 39, chacun étant fixé sur la partie arrière 11 correspondante du brancard 7. Ainsi, la partie arrière 11 du brancard 7 assure la fonction de support latéral de fixation de la batterie de traction 35, ce qui permet d'éviter la transmission d'efforts sur la batterie de traction 35 en cas de choc frontal à faible recouvrement, permettant ainsi de limiter les risques électriques et par conséquent les risques d'incendie de la batterie de traction 35.

La fixation de la batterie de traction 35 aux pièces de renfort longitudinales 31 et/ou aux parties arrière 11 des brancards 7 peut par exemple être opérée par vissage.

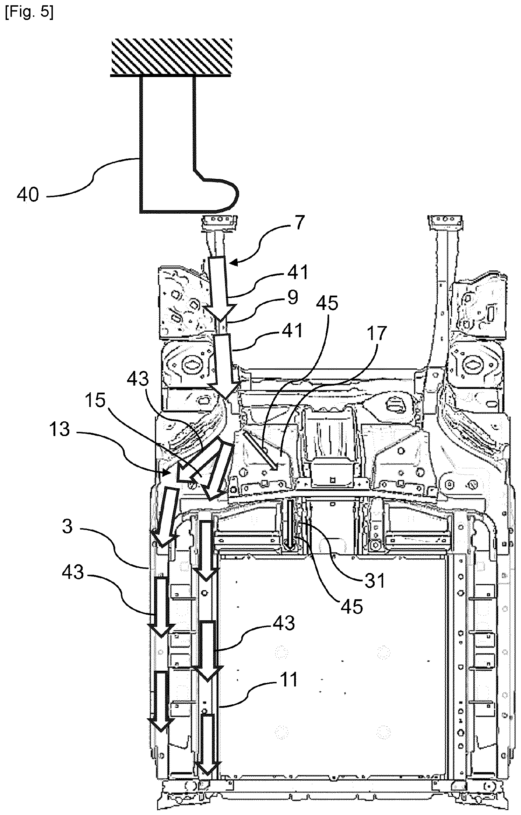

On se réfère à la figure 5 montrant de façon schématique le cheminement des efforts lorsque le véhicule est soumis à un choc frontal à faible recouvrement.

Lorsque le véhicule est soumis à un choc frontal à faible recouvrement contre un obstacle 40, les efforts longitudinaux circulent dans la partie avant 9 du brancard 7, comme représenté par les flèches 41.

Les efforts sont ensuite transmis depuis la partie avant 9 du brancard 7, de façon sensiblement uniforme, au longeron latéral longitudinal 3 et à la partie arrière 11 du brancard 7, via la pièce d'interface extérieure 15 et via la pièce d'interface intérieure 17 de la pièce d'interface intermédiaire 13, comme représenté par les flèches 43.

Une autre partie des efforts est également transmise depuis la partie avant 9 du brancard 7 à la pièce de renfort longitudinale 31, via la pièce d'interface intérieure 17 de la pièce d'interface intermédiaire 13, comme représenté par les flèches 45.

Comme il va de soi, la présente invention ne se limite pas aux seules formes de réalisation de cet ensemble de soubassement de véhicule automobile et de ce véhicule automobile comportant un tel ensemble de soubassement, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Ensemble de soubassement (1) d'un véhicule automobile, comprenant :
- un plancher avant (5),
- un longeron latéral longitudinal (3), bordant latéralement au moins une partie dudit plancher avant (5),
- un brancard (7), comportant une partie avant (9) et une partie arrière (11) s'étendant en arrière de ladite partie avant (9) et s'étendant longitudinalement en vis-à-vis dudit longeron latéral longitudinal (3),
**caractérisé en ce que** ledit ensemble de soubassement (1) comporte une pièce d'interface intermédiaire (13) sur laquelle est fixée, d'une part, ladite partie avant (9) dudit brancard (7) et, d'autre part, ledit longeron latéral longitudinal (3) et ladite partie arrière (11) dudit brancard (7), la distance transversale (D) entre ledit longeron latéral longitudinal (3) et ladite partie arrière (11) dudit brancard (7) étant inférieure ou égale à 25% de la largeur (L) dudit véhicule automobile.

2. Ensemble de soubassement (1) selon la revendication 1, **caractérisé en ce que** ladite partie avant (9) dudit brancard (7) comporte une extrémité arrière (21) fixée à ladite pièce d'interface intermédiaire (13).

3. Ensemble de soubassement (1) selon l'une des revendications 1 ou 2, **caractérisé en ce que** ladite partie arrière (11) dudit brancard (7) comporte une extrémité avant (27) fixée à ladite pièce d'interface intermédiaire (13).

4. Ensemble de soubassement (1) selon l'une quelconque des revendications 1 à 3, **caractérisé en ce que** la fixation de ladite partie avant (9) et/ou de ladite partie arrière (11) dudit brancard (7) sur ladite pièce d'interface intermédiaire (13) est opérée par soudure.

5. Ensemble de soubassement (1) selon l'une quelconque des revendications 1 à 4, **caractérisé en ce que** ladite pièce d'interface intermédiaire (13) comporte :
- une pièce d'interface extérieure (15), sur laquelle est fixée ladite partie avant (9) dudit brancard (7) et ledit longeron latéral longitudinal (3),
- une pièce d'interface intérieure (17), fixée à ladite pièce d'interface extérieure (15), sur laquelle est fixée ladite partie arrière (11) dudit brancard (7).

6. Ensemble de soubassement (1) selon l'une quelconque des revendications 1 à 5, comportant une batterie de traction (35) fixée sous ledit plancher avant (5) et adaptée pour alimenter un moteur électrique dudit véhicule automobile, **caractérisé en ce que** ladite batterie de traction (35) comporte au moins un bord latéral (39) fixé sur ladite partie arrière (11) dudit brancard (7).

7. Ensemble de soubassement (1) selon la revendication 6, **caractérisé en ce qu'**il comporte au moins une pièce de renfort longitudinale (31) fixée à ladite pièce d'interface intermédiaire (13) et à un tunnel central (33) dudit véhicule, et **en ce que** ladite batterie de traction (35) comporte un bord avant (37) fixé à ladite au moins une pièce de renfort longitudinale (31).

8. Véhicule automobile comprenant un ensemble de soubassement (1), **caractérisé en ce que** ledit ensemble de soubassement (1) est selon l'une quelconque des revendications 1 à 7.
